# EUROPÄISCHE PATENTSCHRIFT

(11) **EP 1 503 912 B1**
(45) Veröffentlichungstag und Bekanntmachung des Hinweises auf die Patenterteilung: **24.05.2006**
(21) Anmeldenummer: 03735302.6
(22) Anmeldetag: 14.05.2003
(51) Int. Cl.: B60G 17/015, G01B 7/30, G01D 5/14

(54) **GUMMILAGER MIT EINFEDERUNGSSENSOR**
RUBBER BEARING FOR A SPRING DEFLECTION SENSOR
SILENTBLOC A CAPTEUR DE COMPRESSION DU RESSORT

(30) Priorität: 15.05.2002 DE 10221873
(43) Veröffentlichungstag der Anmeldung: 09.02.2005
(73) Patentinhaber: ZF Lemförder Metallwaren AG, 49448 Lemförde (DE)
(72) Erfinder: SPRATTE, Joachim, 49090 Osnabrück (DE); GRANNEMANN, Bernd, 32479 Hille (DE); ERSOY, Metin, 65396 Walluf (DE)
(86) Internationale Anmeldenummer: PCT/DE2003/001544
(87) Internationale Veröffentlichungsnummer: WO 2003/097388

(56) Entgegenhaltungen:
- EP-A- 0 617 260
- WO-A-03/008819
- WO-A-03/052284
- DE-C- 19 733 719
- GB-A- 2 229 006
- US-A- 4 838 563
- "EIN BERUHRUNGSLOS MESSENDER FAHRZEUGNIVEAUSENSOR VON HELLA HELLA DESIGNED A NEW CONTACTLESS VEHICLE LEVEL SENSOR" ATZ AUTOMOBILTECHNISCHE ZEITSCHRIFT, FRANCKH'SCHE VERLAGSHANDLUNG. STUTTGART, DE, Bd. 96, Nr. 2, 1. Februar 1994 (1994-02-01), Seite 83 XP000426027 ISSN: 0001-2785

## Beschreibung

Die vorliegende Erfindung betrifft ein Lager für einen Lenker einer Radaufhängung eines Fahrzeugs.

In modernen Fahrzeugen z.B. mit Xenon-Scheinwerfern ist eine Leuchtweitenregulierung notwendig, die das Nicken des Fahrzeugs über den Einfederungswinkel mittels Sensoren erfasst und über Aktuatoren die Scheinwerferstellung anpasst. Diese Sensoren werden als separate Baugruppe im Radkasten verbaut und mittels eines Gestänges mit einem Lenker des Fahrwerks verbunden. Nachteilig ist hierbei, das die hierzu verwendeten. Bauteile relativ groß sind und somit unverhältnismäßig viel Bauraum beanspruchen. Durch die Anordnung des Systems im Radkasten ist dieses anfällig gegenüber Steinschlag. Neben dem hohen Montageaufwand ist ferner nachteilig, dass dieses System in mehreren Einzelschritten aufwendig justiert werden muss.

Die gattungsbildenden Druckschriften WO 03/008819 A sowie die WO 03/052284 A offenbaren jeweils ein Lager für einen Lenker einer Radaufhängung eines Fahrzeugs wobei mindestens ein im oder am Lager, welches jeweils als ein Kugelgelenk ausgebildet ist, angeordneter Sensor die relative Bewegung der durch das Lager miteinander verbundenen Fahrzeugteile ermittelt. Diese Sensor- und Lageranordnung ist aber relativ aufwendig und wenig geeignet, einfache Schwenkbewegungen um eine einfache Drehachse, wie sie beispielsweise bei der Einfederung eines Fahrzeuges auftreten, aufzunehmen.

Eine ähnlich aufwendige Sensor- und Lageranordnung ist in der EP 0 617 260 A1 gezeigt, wobei wiederum in aufwendiger Weise ein Kugelgelenk mit einem Sensor zur Ermittlung der relativen Bewegung zwischen zwei zueinander beweglichen Bauteilen einer Radaufhängung Verwendung findet.

Der vorliegenden Erfindung liegt daher die Aufgabe zugrunde, eine einfache Möglichkeit bereitzustellen, die Einfederung eines Fahrzeugs mit einfachen Mitteln zu erfassen.

Diese Aufgabe wird erfindungsgemäß mit einem Lager gemäß den Merkmalen des Anspruchs 1 gelöst. Weitere vorteilhafte Ausgestaltungen des Lagers ergeben sich durch die Merkmale der Unteransprüche. Gleichzeitig wird ein System zur Ermittlung der Einfederung eines Fahrzeugs unter Verwendung eines erfindungsgemäßen Lagers gemäß den Merkmalen des nebengeordneten Unteranspruchs 12 beansprucht.

Der dieser Erfindung zugrunde liegende Erfindungsgedanke besteht darin, das beim Einfedern des Fahrzeugrades oder der Fahrzeugachse zumindest ein den Radträger mit der Karosserie verbindendes Fahrzeugteil, wie z.B. eine Strebe bzw. ein Lenker, verschwenkt bzw. bewegt wird. Die Lenker sind in der Regel mittels Gummilager, welche einen Außenring und einen Innenring mit einem dazwischen angeordneten Gummiring aufweisen an der Karosserie angelagert. Die Verschwenkbewegung des Lenkers beim Ein- bzw. Ausfedem kann gemäß des Erfindungsgedankens unmittelbar mittels eines Sensors, welcher am Außenring oder am Innenring des Gummilagers angeordnet ist, über die Verdrehung des Außenringes gegenüber dem Innenring ermittelt werden. Vorzugsweise wird hierbei das Lager gewählt, welches fest mit der Karosserie in Verbindung ist. Die am Lager des Lenkers ermittelte Ein- bzw. Ausfederung kann dann dem Fahrzeug als Information z.B. für die dynamische Leuchtweitenregulierung zur Verfügung gestellt werden. Vorteilhaft erfolgt die Ermittlung der Größe der Einfederung berührungslos, wodurch es zu keinem Verschleiß durch auftretende Reibung kommt. Durch Integration des Sensors in das Lager wird kein separates Gehäuse benötigt. Es ist jedoch selbstverständlich möglich, den Sensor in einem separaten Gehäuse anzuordnen und mit dem Lager zu verbinden. Gleichsam kann die Einrichtung zur Ermittlung der Einfederung auch als Modul ausgebildet werden, welches in unmittelbarer Nähe des Lagers anordbar ist. So kann ein mittels Magneten erzeugtes Magnetfeld z.B. mittels eines Hall-Sensors detektiert werden. Ebenso kann aber auch ein elektrisches oder sonstiges Feld zur Ermittlung der Einfederung genutzt werden.
Die gesamtheitliche Bewegung der Fahrzeugachse bzw. des Fahrzeugrades wird von der das Fahrzeug lenkenden Person als Ein- bzw. Ausfederung des Rades wahrgenommen. Neben der reinen Ein- bzw. Ausfederung ermöglichen insbesondere Gummilager noch im geringen Maße Winkelbewegungen um die beiden weiteren Raumachsen. Des weiteren sind kleine Schubbewegungen längs der Raumachsen möglich. Bei der Ermittlung der reinen Einfederung sind daher die auftretenden Störgrößen zu beachten. So können z.B. ein Sensor zur Ermittlung des Einfederungswinkels und ein oder mehrere zusätzliche Sensoren zur Ermittlung der Störgrößen eingesetzt werden. Bei geschickter Anordnung und/oder Wahl des Sensors bzw. dessen Aufbaus, lässt sich jedoch mit nur einem Sensor der Einfederungswinkel genau bestimmen. Auch die Bauart des Lagers und/oder der Radaufhängung bzw. der Fahrzeugachse kann dazu beitragen, dass die Störgrößen minimiert werden. Vorteilhaft wird ein Sensor eingesetzt, der eine zu sensierende Größe mit einer bipolaren Ausrichtung verwendet. Will man z.B. mit einer sehr hohen Genauigkeit die Nulllage ermitteln, bietet es sich an, einen Hall-Sensor und ein vorgespanntes magnetisches Feld zu verwenden. Hierbei können die Störgrößen durch ein entsprechend großes Nullfeld kompensiert werden. Bei der vorteilhaften Verwendung eines Hall-IC's ist z.B. der Magnet deutlich größer in seinen Abmessungen als der Hall-IC selbst. Magnetoresistive Sensoren detektieren im Gegensatz zu einem Hall-IC nicht die Feldstärke, sondern nur die Feldrichtung. Dies ist zur Detektierung der Einfederung vorteilhaft.

Nachfolgend werden anhand von Zeichnungen mehrere mögliche Ausführungsformen des Erfindungsgedankens näher erläutert. Es zeigen:
- Fig. 1:: Eine Schnittdarstellung und Draufsicht auf ein Gummilager gemäß dem Stand der Technik mit Angabe möglicher typischer Bewegungen des Lagers;
- Fig. 2:: ein Gummilager, bei dem nur bestimmte Störgrößen neben der Einfederungsbewegung auftreten;
- Fig. 3:: ein zentrisch in einem Magnetpolring angeordneter Hall-Sensor zur Ermittlung der Einfederung;
- Fig. 4:: eine erste mögliche Ausführungsform eines erfindungsgemäßen Lagers;
- Fig. 5:: eine zweite mögliche Ausführungsform eines erfindungsgemäßen Lagers;
- Fig. 6:: eine dritte mögliche Ausführungsform eines erfindungsgemäßen Lagers;
- Fig. 7:: eine vierte mögliche Ausführungsform eines erfindungsgemäßen Lagers;
- Fig. 8:: schematische Darstellung zur Detektierung des Magnetfeldes eines Magnet-Polrings mittels eines magnetoresistiven Sensors.

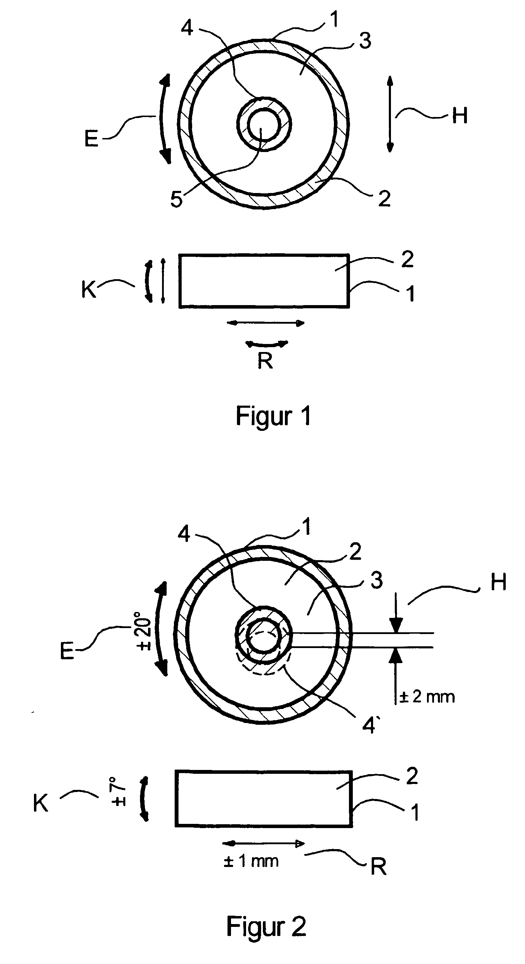

Die Fig. 1 zeigt eine Querschnittsdarstellung sowie eine Draufsicht auf ein Gummilager 1 gemäß dem Stand der Technik. Das Gummilager 1 hat einen Außenring 2 sowie einen Innenring 4, die beide mittels eines Gummirings 3 miteinander verbunden sind. Der Begriff Ring ist dabei im Sinne der Anmeldung nicht zu eng auszulegen, so dass auch von der Kreisform abweichende Querschnitte möglich sind. Der Außenring 2 wird zum Beispiel an dem Lenker eines Fahrzeugs starr befestigt, wohingegen der Innenring 4 mittels seines Hohlraums 5 zum Beispiel einen Teil der Karosserie des Fahrzeugs umgreift und fest mit diesem verbunden ist. Aufgrund der Gummiwalkbewegung des Gummirings 3 können sich der nicht dargestellte Lenker und die ebenfalls nicht dargestellte Karosserie in einem gewissen Bereich zueinander bewegen. In der Regel ist das Gummilager derart an der Karosserie befestigt, dass die Einfederung des Fahrzeugs eine Verdrehung des Innenrings 4 gegenüber dem Außenring 2 und somit gleichsam eine Walkbewegung des Gummis bewirkt. Die Winkeländerung aufgrund der Einfederung ist in der Figur 1 mit dem Pfeil E gekennzeichnet.

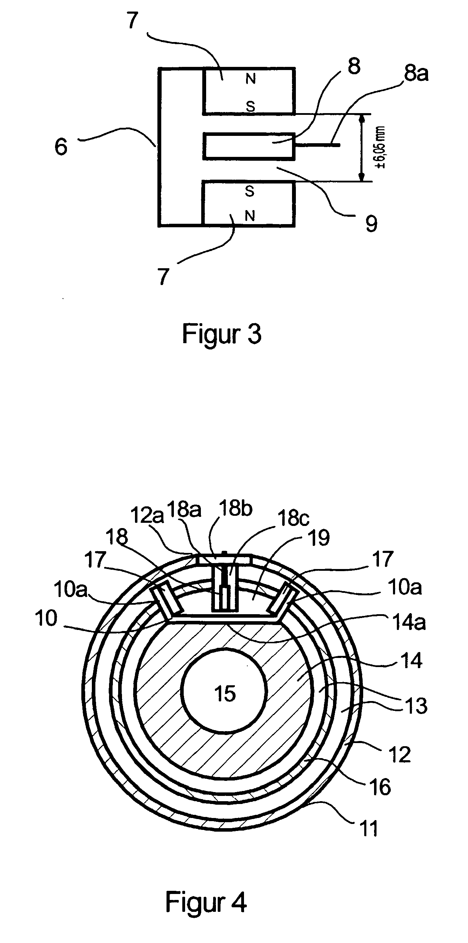

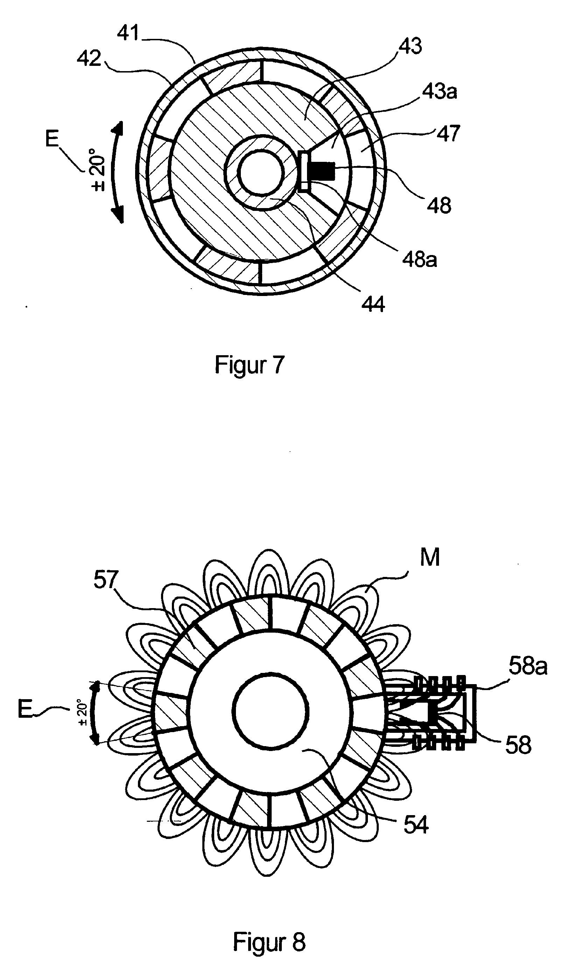

Wie der Fig. 2 zu entnehmen ist, bewirkt die Ein- bzw. Ausfederung (Pfeil E) von der Nulllage in der Regel eine typische Winkeländerung von ca. +/- 20 Grad. Neben der Einfederungsbewegung sind zudem kleine Schubbewegungen längs der Raumachsen möglich. Diese sind durch die Pfeile H, R und K gekennzeichnet und stellen Störbewegungen dar, die eventuell zu Messfehlern des Einfederungswinkels führen. Die Störbewegung H kennzeichnet dabei die Schubbewegung in vertikaler Richtung. Die Pfeilrichtung R kennzeichnet die Schubbewegung in horizontaler Richtung und der Pfeil K die Kardanik, die sowohl um die vertikale Richtung, als auch um die horizontale Richtung erfolgen kann. Unter vertikaler Richtung ist dabei eine Richtung senkrecht zur Längsachse des Lagers zu verstehen, wobei die horizontale Richtung eine Richtung senkrecht zur Längsachse und senkrecht zur vertikalen Richtung bezeichnet. Die Längsachse kann dabei als Mittelachse des Außenrings bzw. des Innenrings definiert werden. Alle Störgrößen können mittels geeigneter Sensoren direkt erfasst werden. Dies bedingt jedoch nachteilig eine große Anzahl von Sensoren, wodurch der Aufwand zur Ermittlung der tatsächlichen Ein- bzw. Ausfederung unverhältnismäßig groß ist. Um Störgrößen weitestgehend auszuschließen, bietet sich ein Sensor an, der ein Feld mit einer bipolaren Ausrichtung erfassen kann. Hierzu ist zum Beispiel ein magnetisches System geeignet, wie es in den Fig. 3 bis 8 dargestellt ist. Es ist jedoch ebenso möglich, optische, induktive oder kapazitive Messungen zur Ermittlung des Ein- bzw. Ausfederungswinkels vorzunehmen. Aufgrund des einfachen Aufbaus, des geringen Wartungsaufwands, sowie der Robustheit gegenüber Verschmutzung zeichnen sich jedoch magnetische Systeme vorteilhaft aus. Will man mit einer sehr hohen Genauigkeit die Nulllage erfassen, bietet sich eine Null-Feld-Sensierung, z. B. mittels eines Hall-IC's in einem vorgespannten Magnetfeld an. Ein entsprechendes Magnetfeld eines Magnetpolrings ist in der Fig. 8 dargestellt. Zunächst sollen jedoch einige mögliche Ausführungsformen des erfindungsgemäßen Lagers anhand der Fig. 3 bis 7 erläutert werden.

Die Fig. 3 zeigt einen äußeren Magnetaufbau 7, in dessen Mitte zentrisch ein Hall-Sensor 8 mit seinen Anschlüssen 8a angeordnet ist. Zwischen den Magneten 7 des Magnetaufbaus und dem Hall-Sensor 8 befindet sich ein Luftspalt 9. Der magnetische Kreis ist über eine magnetische Kopplung 6 in Form eines Metalltopfes geschlossen. Dieser Metalltopfkann z. B. am Außenring eines Gummilagers befestigt sein, wohingegen der Hall-Sensor 8 am Innenring des Gummilagers befestigt ist. Werden Außen- und Innenring zueinander bewegt, insbesondere verdreht, ändert sich das Magnetfeld im Bereich des Hall-Sensors, was als Magnetfeldänderung vom Hall-Sensor 8 selbst detektiert wird, woraufhin der Einfederungswinkel E ermittelt werden kann. Zwischen den Magneten ist ein magnetisches Feld ausgebildet, das zum Beispiel von 0 ansteigend zu den Magnetpolen hin zunimmt. Befestigt man das Hall-IC so zwischen den Magneten, dass es sich exakt im Nullfeld befindet, so kann man bei kleinen Bewegungen des Hall-ICs relativ zu den Magneten bereits eine große Spannungsänderung der Hallspannung am Hallsensor beobachten. Dieses Verfahren eignet sich also hervorragend zum Detektieren kleiner Bewegungen. Die Integration einer solchen Sensorik ist problemlos auch bei handelsüblichen Gummilagern möglich. Um Messfehler durch eventuelle Störbewegungen zu kompensieren, können zusätzliche Sensoren vorgesehen werden. So können zum Beispiel magnetoresistive Sensoren oder Hall-Sensoren, z. B. in einem Winkel von 90 Grad zueinander, angeordnet werden, um derartige Störgrößen zu detektieren.

Die Fig. 4 zeigt eine erste mögliche Ausführungsform 11 eines Gummilagers, bei dem an der Oberseite eine Öffnung eingefräst ist, so dass von der Seite betrachtet der Innenring 14 freiliegt. Der Innenring 14 weist eine abgesetzte flache Fläche 14a auf, an der ein Befestigungsteil 10 starr angeordnet ist, welches mit seinen freien Ende 10a jeweils einen Magneten 17 trägt. Am Außenring 12 des Gummilagers ist über eine Befestigungskonstruktion 18b ein Hall-Sensor 18 angeordnet, der sich zwischen den Magneten 17 befindet. Wird der Innenring 14 gegenüber dem Außenring 12 verdreht, welches einer Ein- bzw. Ausfederung entspricht, so bewegt sich der Hall-Sensor 18 entweder zum linken oder rechten Magneten 17, wodurch sich das Magnetfeld im Bereich des Hall-Sensors 18 verändert. Die Änderung des Magnetfeldes wird über eine nachgeschaltete Elektronik, welche nicht dargestellt ist, detektiert, wonach aus den Signalen des Sensors der Einfederungswinkel E ermittelbar ist und nachgeordneten Systemen des Kraftfahrzeugs zur Verfügung gestellt werden kann. Durch die Haltevorrichtung 18b, 18c für den Hall-Sensor 18 wird der ausgesparte Bereich des Gummilagers 11 abdichtend verschlossen, so dass kein Schmutz in den Bereich des Sensors 18 und der Magnete 17 gelangen kann.

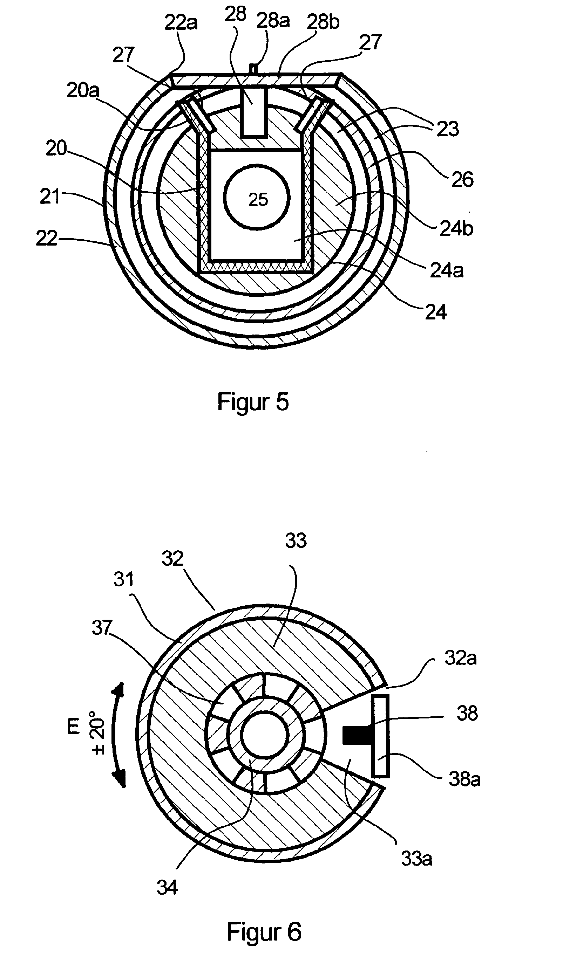

Die Fig. 5 zeigt eine zweite mögliche Ausführungsform eines Gummilagers 21, welches ähnlich aufgebaut ist wie das Gummilager 11 gemäß der Fig. 4. Der Sensor 28 sowie die Magnete 27 sind jedoch an einer Stirnseite des Gummilagers 21 angeordnet. So ist aus dem im Profil kreisförmigen inneren Ring 24 an seiner Stirnseite ein quaderförmiger Block 24a herausgeführt, der über die Stirnseite 24b des Innenrings 24 hervorsteht. Die Form des ausgeführten Bereichs des Innenrings kann selbstverständlich beliebig gewählt werden. Dieser quaderförmige Vorsprung 24a wird von einer Haltevorrichtung 20 umgriffen, an deren freien Enden 20a die Magnete 27 angeordnet sind. Die freien Enden 20a der Haltevorrichtung 20 stehen über den quaderförmigen Vorsprung 24a hervor, so dass zwischen den Magneten 27 der Sensor 28 angeordnet werden kann, der über eine Haltevorrichtung 28b an dem Außenring 22 des Gummilagers 21 befestigt ist. Der Raum für die Magnete 27 sowie den Sensor 28 kann durch Ausfräsung des stabilisierenden Zwischenrings 26 sowie des Innenrings 24 und der Gummiringe 23 erfolgen. Es ist denkbar, dass keine zusätzliche Haltevorrichtung 28b vorgesehen wird, an welcher der Sensor 28 befestigt wird. Vielmehr kann der Außenring 22 unmittelbar oder über zusätzliche Zwischenteile zur Befestigung des Sensors 28 dienen.

Die Fig. 6 zeigt eine dritte mögliche Ausführungsform eines Gummilagers zur Ermittlung der Einfederungstiefe des Kraftfahrzeugs mittels magnetoresistivern Sensor. Dabei ist an diesem Gummilager 31 am Innenring 34 ein Magnetpolring 37, bestehend aus einer alternierenden Folge von radial und zentripetal orientierten (nord- und südgepolten) Magneten, befestigt; wobei die Orientierung eines jeden der Magneten von dessen Nordpol ausgehend in Richtung auf den Südpol desselben Magneten gerichtet ist. Der Sensor 38 ist über eine Befestigungsvorrichtung 38a am Außenring 32 des Gummilagers 31 befestigt. Wird der Innenring 34 gegenüber dem Außenring 32 verdreht und der Gummiring 33 gewalkt, so ändert sich das Magnetfeld im Bereich des Sensors 38, womit die Einfederungshöhe E bzw. der Einfederungswinkel E ermittelbar ist. Ist der Magnetpolring 37 in der axialen Mitte des Gummilagers 31 angeordnet, so ist es notwendig, dass zum Einbau des Sensors 38 der Gummiring 33 sowie der äußere Ring 32 zumindest teilweise entfernt wird. Ist dagegen der Magnetpolring 37 an der Stirnseite des Gummilagers 31 angeordnet, so kann ebenfalls der Sensor 38 an der Stirnseite des Außenrings 32 angeordnet werden.

Es ist selbstverständlich möglich, bei allen in dieser Anmeldung vorgestellten möglichen Ausführungsformen, bei denen die Magnete und der Sensor an der Stirnseite des Lagers angeordnet sind, einen Deckel oder ein Gehäuse vorzusehen, der die Sensoreinheit gegen Verschmutzung und mechanischer Beschädigung schützt.

Die Fig. 7 zeigt eine weitere mögliche Ausführungsform eines Gummilagers 41, bei dem der magnetoresistive Sensor 48 am Innenring 44 des Gummilagers angeordnet ist, wogegen am Außenring 42 ein Magnetpolring 47 angeordnet ist. In bereits erläuterter Art und Weise wird dann die Verdrehung von Außenring zu Innenring mittels des sich ändernden Magnetfelds im Bereich des magnetoresistiven Sensors 48 ermittelt.

Die Fig. 8 zeigt mögliche Magnetfeldlinien M eines Magnetpolrings 57, der an einem Innenring 54 eines Gummilagers befestigt ist. Ein magnetoresitiver Sensor (MRS) 58 ist im Bereich des Magnetfelds M angeordnet und mit dem nicht dargestellten Außenring des Lagers starr verbunden. Bei der Einfederung des Kraftfahrzeugs bewegt sich der Magnetpolring 57 relativ zum MRS, wobei deutlich wird, dass sich dann das Magnetfeld im Bereich des MRS aufgrund der Relativbewegung ändert. Der MRS 58 selbst ist über Anschlüsse 58a mit einer nachgeschalteten Elektronik elektrisch verbunden. Bei geeigneter Wahl des MRS 58 können Winkelbewegungen von deutlich weniger als einem Grad sicher detektiert werden, womit eine genaue Bestimmung des Einfederungswinkels möglich ist.

Es ist selbstverständlich, dass sowohl Sensor als auch Magnete bzw. Magnetpolring in Modulweise an vorhandenen Gummilagern anordbar sind, wobei dann entsprechende Befestigungsvorrichtungen bzw. -mittel vorzusehen sind, damit die Magnete sowie der Sensor an dem Außen- bzw. Innenring des Gummilagers befestigbar sind. Es ist ebenfalls selbstverständlich möglich, dass bei Vorsehen eines Zwischenrings 16, 26 auch die Magnete oder der MRS an diesem Zwischenring befestigbar bzw. anordbar sind. Es ist jedoch sinnvoll, jeweils die Teile des Lagers zu wählen, welche die größten Relativbewegungen zueinander ausführen.

### Bezugszeichenliste:

- 1: Gummilager gem. dem Stand der Technik
- 10, 20: Befestigungsvorrichtung für Magnete
- 10a, 20a: Freie Enden der Befestigungsvorrichtung zur Halterung der Magnete
- 11,21,31,41: Verschiedene Ausführungsformen eines Lagers
- 2,12,22,32,42: Außenring des Lagers
- 3,13,23,33,43: Gummiring des Lagers
- 4,14,24,34,44: Innenring des Lagers
- 5,15,25,35,45: Hohlraum des Innenrings des Lagers
- 6: Magnetischer Rückschluß
- 16,26: Zwischenring des Lagers
- 7,17,27: Magnete zur Erzeugung eines stationären Magnetfeldes
- 37,47,57: Magnetpolring
- 18,28: Sensor, insbesondere Hall-Sensor
- 38,48,58: Sensor, insbesondere magnetoresistiver Sensor
- 8a,18a,28a,58a: Elektrische Anschlüsse des Sensors
- 18b,18c,28b, 38a, 48a: Befestigungsvorrichtung für Sensor
- 19,33a, 43a: Aussparung im Gummiring
- E: Einfederungsbewegung des Lagers
- H,K,R: Störbewegungen aufgrund von Störgrößen

## Patentansprüche

1. Lager (11, 21, 31, 41) für einen Lenker einer Radaufhängung eines Fahrzeugs mit mindestens einem im oder am Lager (11, 21, 31, 41) angeordneten Sensor (18, 28, 38, 48, 58), welcher die relative Bewegung der durch das Lager (11, 21, 31, 41) miteinander verbundenen Fahrzeugteile ermittelt, **dadurch gekennzeichnet, dass** das Lager (11, 21, 31, 41) ein Gummilager ist, welches einen Außen- (12, 22, 32, 42) und einen Innenring (14, 24, 34, 44, 54) aufweist, zwischen denen ein Gummiring (13, 23, 33, 43) angeordnet ist, mit mindestens einen am Außenring (2) oder Innenring (4) angeordneten Sensor (18, 28, 38, 48, 58), der die Verdrehung des Außenringes (2) gegenüber dem Innenring (2) ermittelt und in das Gummilager integriert ist.

2. Lager nach Anspruch 1, **dadurch gekennzeichnet, dass** mindestens ein Sensor (18, 28, 38, 48, 58) die Verdrehung, Verschwenkung und/oder Verschiebung der durch das Lager (11, 21, 31, 41) miteinander verbundenen Fahrzeugteile ermittelt.

3. Lager nach Anspruch 1, **dadurch gekennzeichnet, dass** mindestens ein Sensor (18, 28, 38, 48, 58) die Verdrehung und mindestens ein Sensor die relative Verschiebung der durch das Lager (11, 21, 31, 41) miteinander verbundenen Fahrzeugteile ermittelt.

4. Lager nach einem der vorhergehenden Ansprüche, **dadurch gekennzeichnet, dass** mindestens ein Magnet (17, 27, 37, 47, 57) im oder am Lager (11, 21, 31, 41) angeordnet ist.

5. Lager nach einem der vorhergehenden Ansprüche, **dadurch gekennzeichnet, dass** das Lager (31, 41) einen Magnetpolring (37, 47, 57) aufweist, dessen Magnetfeld von einem Sensor bzw. Magnetfeldscnsor (38, 48, 58) detektiert wird.

6. Lager nach Anspruch 5, **dadurch gekennzeichnet, dass** der Magnetpolring (37, 57) an dem Innenring (34, 54) des Gummilagers (31) befestigt ist, insbesondere den Innenring selbst bildet.

7. Lager nach Anspruch 5, **dadurch gekennzeichnet, dass** der Magnetpolring (47) an dem Außenring (42) des Gummilagers (41) direkt oder über ein Zwischenteil befestigt ist oder diesen selbst bildet.

8. Lager nach einem der vorhergehenden Ansprüche 1 bis 4, **dadurch gekennzeichnet, dass** der Sensor zentrisch zwischen mindestens zwei Magneten angeordnet ist.

9. Lager nach Anspruch 8, **dadurch gekennzeichnet**, die gleichnamigen Pole der beiden Magneten einander zugewandt sind.

10. Lager nach einem der vorhergehenden Ansprüche, **dadurch gekennzeichnet, dass** der Sensor ein Magnetoresistiver- oder Hall-Sensor ist.

11. Lager nach einem der Ansprüche 1 bis 3, **dadurch gekennzeichnet, dass** die Bewegung des Lagers kapazitiv oder induktiv ermittelt wird.

12. System zur Ermittlung der Einfederung eines Fahrzeugs unter Verwendung eines Lagers nach einem der vorhergehenden Ansprüche, **dadurch gekennzeichnet, dass** eine Datenverarbeitungseinheit aus den Sensordaten die Ein- bzw. Ausfederung mindestens eines Rades bzw. einer Fahrzeugachse des Fahrzeugs berechnet.

13. System nach Anspruch 12, **dadurch gekennzeichnet, dass** die Größe der Einfederung zur Höheneinstellung der Fahrzeugscheinwerfer und/oder der Niveauregulierung des Fahrzeugs verwendet wird.

## Claims

1. Bearing (11, 21, 31, 41) for a control arm of a wheel suspension of a vehicle, with at least one sensor (18, 28, 38, 48, 58) which is disposed in or at the bearing (11, 21, 31, 41) and establishes the relative movement of the vehicle parts connected together by the bearing (11, 21, 31, 41), **characterised in that** the bearing (11, 21, 31, 41) is a rubber bearing which comprises an outer (12, 22, 32, 42) and an inner ring (14, 24, 34, 44, 54), between which a rubber ring (13, 23, 33, 43) is disposed, with at least one sensor (18, 28, 38, 48, 58) which is disposed at the outer ring (2) or inner ring (4), establishes the turning of the outer ring (2) with respect to the inner ring (4) and is integrated into the rubber bearing.

2. Bearing according to Claim 1, **characterised in that** at least one sensor (18, 28, 38, 48, 58) establishes the turning, pivoting and/or displacement of the vehicle parts connected together by the bearing (11, 21, 31, 41).

3. Bearing according to Claim 1, **characterised in that** at least one sensor (18, 28, 38, 48, 58) establishes the turning and at least one sensor establishes the relative displacement of the vehicle parts connected together by the bearing (11, 21, 31, 41).

4. Bearing according to any one of the preceding Claims, **characterised in that** at least one magnet (17, 27, 37, 47, 57) is disposed in or at the bearing (11, 21, 31, 41).

5. Bearing according to any one of the preceding Claims, **characterised in that** the bearing (31, 41) comprises a magnetic pole ring (37, 47, 57) whose magnetic field is detected by a sensor or magnetic field sensor (38, 48, 58).

6. Bearing according to Claim 5, **characterised in that** the magnetic pole ring (37, 57) is fastened to the inner ring (34, 54) of the rubber bearing (31), in particular to the inner ring itself.

7. Bearing according to Claim 5, **characterised in that** the magnetic pole ring (47) is fastened to the outer ring (42) of the rubber bearing (41) directly or via an intermediate part or forms this itself.

8. Bearing according to any one of the preceding Claims 1 to 4, **characterised in that** the sensor is disposed centrally between at least two magnets.

9. Bearing according to Claim 8, **characterised in that** the like poles of the two magnets face one another.

10. Bearing according to any one of the preceding Claims, **characterised in that** the sensor is a magnetoresistive or Hall sensor.

11. Bearing according to any one of Claims 1 to 3, **characterised in that** the movement of the bearing is established capacitively or inductively.

12. System for establishing the spring deflection of a vehicle using a bearing according to any one of the preceding Claims, **characterised in that** a data processing unit calculates the spring deflection or rebound of at least one wheel or one vehicle axle of the vehicle from the sensor data.

13. System according to Claim 12, **characterised in that** the magnitude of the spring deflection is used to adjust the height of the vehicle headlights and/or to control the level of the vehicle.

## Revendications

1. Palier (11, 21, 31, 41) pour un bras oscillant d'une suspension de roue d'un véhicule, comprenant au moins un détecteur (18, 28, 38, 48, 58) disposé dans ou sur le palier (11, 21, 31, 41), déterminant des mouvements relatifs entre les éléments du véhicule, qui sont reliés l'un à l'autre via ce palier (11, 21, 31, 41),
**caractérisé en ce que** le palier (11, 21, 31, 41) est un palier en caoutchouc qui comporte une bague extérieure (12, 22, 32, 42) et une bague intérieure (14, 24, 34, 44, 54) entre lesquelles est insérée une bague en caoutchouc (13, 23, 33, 43), comprenant au moins un détecteur (18, 28, 38, 48, 58) monté sur la bague extérieure (2) ou la bague intérieure (4) pour déterminer la rotation relative entre la bague extérieure (2) et la bague intérieure (2) en étant intégré dans le palier en caoutchouc.

2. Palier selon la revendication 1, **caractérisé en ce qu'**au moins un détecteur (18, 28, 38, 48, 58) détermine la rotation, le basculement et/ou la translation des éléments du véhicule qui sont reliés l'un à l'autre par l'intermédiaire du palier (11, 21, 31, 41).

3. Palier selon la revendication 1, **caractérisé en ce qu'**au moins un détecteur (18, 28, 38, 48, 58) détermine la rotation relative, et au moins un détecteur détermine la translation relative des éléments du véhicule qui sont reliés l'un à l'autre par l'intermédiaire du palier (11, 21, 31, 41).

4. Palier selon l'une des revendications précédentes, **caractérisé en ce qu'**au moins un aimant (17, 27, 37, 47, 57) est monté dans ou sur le palier (11, 21, 31, 41).

5. Palier selon l'une des revendications précédentes, **caractérisé en ce que** le palier (31, 41) comporte un anneau polaire magnétique (37, 47, 57) dont le champ magnétique est détecté par un capteur ou détecteur de champ magnétique (38, 48, 58).

6. Palier selon la revendication 5, **caractérisé en ce que** l'anneau polaire magnétique (37, 57) est fixé sur la bague intérieure (34, 54) du palier en caoutchouc (31) et forme notamment lui-même la bague intérieure.

7. Palier selon la revendication 5, **caractérisé en ce que** l'anneau polaire magnétique (47) est fixé sur la bague extérieure (42) du palier en caoutchouc (41), de façon directe ou via un élément intermédiaire, ou forme lui-même la bague extérieure.

8. Palier selon l'une des revendications précédentes 1 à 4, **caractérisé en ce que** le capteur est disposé de façon centrée entre au moins deux aimants.

9. Palier selon la revendication 8, **caractérisé en ce que** les pôles de même polarité des deux aimants sont tournés l'un vers l'autre.

10. Palier selon l'une des revendications précédentes, **caractérisé en ce que** le détecteur est un détecteur magnétorésistif ou un détecteur à effet Hall.

11. Palier selon l'une des revendications 1 à 3, **caractérisé en ce que** le mouvement du palier est déterminé par voie capacitive ou par induction.

12. Système de détermination du mouvement de compression des suspensions d'un véhicule en mettant en oeuvre un palier selon l'une des revendications précédentes,
**caractérisé en ce qu'**une unité de traitement des données calcule le mouvement de compression ou de détente de la suspension d'au moins une roue ou d'un essieu du véhicule à partir des données du détecteur.

13. Système selon la revendication 12, **caractérisé en ce que** l'amplitude du mouvement de compression des suspensions est exploitée pour effectuer le réglage vertical des phares du véhicule et/ou la régulation de l'assiette du véhicule.
